# EUROPÄISCHE PATENTSCHRIFT

(11) **EP 2 097 217 B1**
(45) Veröffentlichungstag und Bekanntmachung des Hinweises auf die Patenterteilung: **17.11.2010**
(21) Anmeldenummer: 06847018.6
(22) Anmeldetag: 24.10.2006
(51) Int. Cl.: B24B 7/00, B24B 41/04, B23Q 3/18

(54) **WERKZEUGHALTER FUER TELLERSCHLEIFWERKZEUGE**
TOOL HOLDER FOR DISK GRINDING TOOLS
PORTE-OUTIL POUR DES OUTILS DE MEULAGE À DISQUE

(43) Veröffentlichungstag der Anmeldung: 09.09.2009
(73) Patentinhaber: Vogel, Josef, 6048 Horw (CH)
(72) Erfinder: Vogel, Josef, 6048 Horw (CH)
(74) Vertreter: Werner, André
(86) Internationale Anmeldenummer: PCT/EP2006/067723
(87) Internationale Veröffentlichungsnummer: WO 2008/049459

(56) Entgegenhaltungen:
- DD-A3- 145 453
- US-A- 2 948 087
- US-A- 3 874 123
- US-A- 5 755 537

## Beschreibung

Die vorliegende Erfindung betrifft einen Werkzeughalter für Tellerschleifwerkzeuge nach dem Oberbegriff von Anspruch 1, eine Oberflächenbearbeitungsvorrichtung (Anspruch 10) sowie ein Verfahren zur schleifenden Bearbeitung von Werkstücken (Anspruch 11).

In der industriellen Entgrat- und Oberflächenbearbeitungstechnik werden beispielsweise Tellerschleifwerkzeuge eingesetzt. Derartige Schleifwerkzeuge weisen einen tellerförmigen Grundkörper auf, welcher einerseits die Schleifmittel aufnimmt und andererseits ein Verbindungssystem aufweist, um mit der Antriebsspindel der Bearbeitungsvorrichtung form- und kraftschlüssig verbunden zu werden.

Als Schleifmittel werden dabei beispielsweise Lamellen, Borsten, Flies und Schleifklötze eingesetzt, welche mit der Unterseite des Grundkörpers verbunden sind. Entsprechend dem Einsatzgebiet werden unterschiedlichste Materialen eingesetzt, um das gewünschte Schleif und/oder Entgratresultat zu erzielen.

Als Antriebsspindeln zur Aufnahme und Rotation dieser Werkzeuge sind Einzelspindeln bekannt, welche jeweils ein einziges Werkzeug aufnehmen. Um ein regelmässiges Schleifbild zu erhalten, ist dabei die Spindel in der Regel als Exzenterspindel ausgelegt, d.h. die Spindel selbst wird exzentrisch um eine zentrale Werkzeugachse rotierend angetrieben und selbst ebenfalls rotiert. Beispielsweise kann dies mittels eines Planetengetriebes erfolgen, wobei dann die Drehzahlverhältnisse zwischen Spindeldrehzahl und exzentrischer Rotation durch das Zahnverhältnis des Planetengetriebes fest vorgegeben sind.

Aus der EP0919332 ist beispielsweise eine derartige Vorrichtung mit einer Spindel bekannt, bei welcher die Drehzahlen durch Anordnung von zwei Antriebsmotoren voneinander unabhängig eingestellt werden können.

Bei dieser Antriebsart können auch mehrere Spindeln in einem gemeinsamen Spindelträger angeordnet sein und damit die Bearbeitungswirkung durch gleichzeitigen Einsatz von mehreren Werkzeugen erhöht werden. Die Werkzeuge kommen dabei gemeinsam zum Einsatz und müssen daher auch identische Abmessungen aufweisen, was entsprechend genau gefertigte Werkzeuge bedingt. Bei einem Wechsel der Werkzeuge, sei es weil sie abgenutzt sind oder für einen Wechsel des Werkzeugtyps, müssen dabei immer alle Werkzeuge gleichzeitig ausgewechselt werden. Damit eignet sich dieses System besonders gut für hohe Bearbeitungsvolumen in grossen Bearbeitungsvorrichtungen mit möglichst mehreren derartigen Bearbeitungsstationen.

Aus US 2 948 087 ist eine Vorrichtung zum Aufrauhen von Oberflächen lithographischer Platten bekannt.

Die Aufgabe der vorliegenden Erfindung bestand darin, einen derartige Spindelträger zur Aufnahme von Schleifwerkzeugen bereitzustellen, welcher mit nur kurzen Standzeiten die Bearbeitung von Werkstücken mit unterschiedlichen Schleifwerkzeugen erlaubt.

Diese Aufgabe wird erfindungsgemäss durch eine Antriebsspindel mit den Merkmalen nach Anspruch 1 gelöst.

Weitere erfindungsgemässe Ausführungsformen ergeben sich aus den Merkmalen der weiteren Ansprüche 2 bis 9.

Es ist hier festzuhalten, dass nachfolgend unter dem Begriff Schleifwerkzeug sowohl abrasive Schleifwerkzeuge wie Tellerschleifwerkzeuge mit Lamellen-, Flies-, und Borstenelementen sowie Hartbelägen wie auch nicht-abrasive Polierscheiben verstanden wird, die zum Schleifen, Entgraten und Polieren von Werkstücken eingesetzt werden.

Beim Werkzeughalter mit mindestens zwei im Werkzeughalter angeordneten Werkzeugspindeln zur Aufnahme von Schleifwerkzeugen, wobei die Werkzeugspindeln rotierbar um ihre Achse angetrieben exzentrisch um eine gemeinsame Hochachse des Werkzeughalters ebenfalls rotierbar angetrieben angeordnet sind, sind erfindungsgemäss die Werkzeugspindeln in Bezug auf den Werkzeughalter axial zur Hochachse unabhängig voneinander einzeln verschiebbar angeordnet. Damit ist es möglich, entsprechend dem Bedarf nur eine, mehrere oder alle Werkzeugspindeln in eine Arbeitsstellung zu fahren und damit Werkstücke gezielt mit einem, mehreren oder allen Schleifwerkzeugen zu bearbeiten. So kann beispielsweise ein Werkzeughalter mit mehreren Werkzeugspindeln ausgerüstet sein, die jeweils mit unterschiedlichen Schleifwerkzeugen bestückt werden. Damit ist es möglich, ohne Werkzeugwechsel mit demselben Werkzeughalter entsprechend der Anzahl Werkzeugspindeln resp. der Anzahl unterschiedlicher Schleifwerkzeuge unterschiedliche Bearbeitungsvorgänge auszuführen.

Beispielsweise sind die Werkzeugspindeln in einem um die Hochachse drehbar im Werkzeughalter angeordneten und mit einem Antrieb verbundenen Träger drehbar gelagert. Der Träger ist dabei vorteilhaft mit einem eigenen Antrieb versehen und wird damit unabhängig vom Antrieb der Werkzeugspindeln betrieben. Damit lassen sich gezielt spezielle Bearbeitungsabläufe einstellen, bei Verwendung von Elektromotoren als Antriebe mittels einer computergesteuerten numerischen Steuerung. Zusammen mit einer Steuerung der relativen Bewegung der Werkstücke in Bezug auf die Achse des Werkzeughalters lassen sich damit praktisch beliebige Bearbeitungsvorgänge einstellen Beispielsweise weist die Werkzeugspindel zwei ineinander axial in Bezug auf ihre Längsachse verschiebbare Hohlzylinder auf, einen äusseren Hauptzylinder und einen inneren Arbeitszylinder, wobei die beiden Zylinder in Bezug auf ihre Längsachse verdrehfest zueinander angeordnet sind. Damit lassen sich die beiden Zylinder gegeneinander verschieben, vorzugsweise zwischen zwei definierten Endanschlägen. Damit kann beispielsweise der äussere Hauptzylinder angetrieben werden, wobei die Drehbewegung vorteilhaft auf den inneren Arbeitszylinder übertragen wird. Die definierten Endanschläge können dabei fest im Werkzeughalter angeordnet sein oder als individuell einstellbare Anschläge ausgebildet sein, die entsprechend den Spezifikationen des entsprechenden Schleifwerkzeuges gegenüber dem Werkzeughalter positioniert werden können. Beispielsweise können durch einen einstellbaren unteren Endanschlag, der die Bearbeitungsstellung resp. -ebene des Schleifwerkzeuges definiert, unterschiedliche Höhen resp. Dicken von Schleifwerkzeugen kompensiert werden. Beispielsweise erfolgt die verdrehfeste, längsverschiebbare Verbindung zwischen dem Hauptzylinder und dem Arbeitszylinder mittels einer Kugelkeilwelle. Eine derartige Verbindung erlaubt ruhige und stabile Laufeigenschaften und eine spielfreie Drehmomentübertragung zwischen den beiden Zylindern. Das Drehmoment wird dabei über die parallel zur Längsachse der beiden Zylinder angeordneten Kugelreihen gleichmässig übertragen, wobei auch eine Umkehr der Drehrichtung erfolgen kann. Die Kugeln werden dabei durch ein zwischen den beiden Zylindern angeordneten Kugelkäfig gehalten. Dabei wird die Kugelkeilwelle entweder direkt in die entsprechenden Oberflächen von Hauptzylinder und Arbeitszylinder integriert ausgeführt oder als separates Element mit diesen beiden Zylindern verbunden.

Beispielsweise ist eine Kugelkeilwelle mit mindestens drei Laufrillenpaaren eingesetzt. Dies ergibt eine optimale, spielfreie Übertragung selbst hoher Drehmomente bei grossen Rotationsgeschwindigkeiten. Auch lässt eine derartige Kugelkeilwelle eine praktisch spielfreie Drehrichtungsumkehr zu, falls dies benötigt wird.

Beispielsweise ist zwischen den beiden Hohlzylindern mindestens ein dichter Zylinderraum ausgebildet der mit einem Hydraulik- oder Pneumatiksystem verbunden ist und am Hauptzylinder und am Arbeitszylinder ist jeweils mindestens eine gegeneinander gerichtete Wirkfläche ausgebildet, vorzugsweise in Form von ringförmigen, im Wesentlichen senkrecht zur Längsachse der Werkzeugspindel verlaufenden Wirkflächen. Es wird also beispielsweise zwischen Hauptzylinder und Arbeitszylinder eine Ringkammer gebildet, welche mit den entsprechenden Dichtungen ausgestattet ist. Da zwischen den beiden Teilen keine Rotationsbewegung ausgeführt wird, muss die Dichtung lediglich auf Verschiebung ausgelegt werden. Damit lässt sich die Verschiebung der beiden Zylinder der Werkzeugspindel hydraulisch oder pneumatisch bewerkstelligen. Häufig ist bei Maschinen, auf welchen derartige Werkzeugaufnahmen zum Einsatz kommen, eine dieser beiden Steuerungssysteme bereits vorhanden und kann mit benutzt werden.

Beispielsweise sind Federmittel ausgebildet, um den Arbeitszylinder gegenüber dem Hauptzylinder in seiner Ruhestellung gegen einen Ruheanschlag zu fixieren. Damit wird eine definierte Ruhestellung eingenommen, ohne dass dafür ein Hydraulik- oder Pneumatikdruck notwendig ist. Vorteilhaft ist die Ruhestellung die in Bezug auf den Bearbeitungseinsatz obere Stellung der Werkzeugspindel, so dass auch bei einem Ausfall der Hydraulik resp. Pneumatik die Werkzeuge vom Werkstück abgehoben werden und in die Ruhestellung zurückfahren. Weiter kann damit die Längsbewegung von der Ruhestellung in die abgesenkte Arbeitsstellung und wieder zurück in die Ruhestellung mit einem einzigen Zylinderraum realisiert werden. Vorteilhaft ist die Position der Arbeitsstellung durch einen mechanischen Anschlag definiert, so dass diese wiederholt immer identisch erstellt werden kann.

Beispielsweise sind am unteren Ende des inneren Arbeitszylinders Verbindungselemente zur Aufnahme eines Schleifwerkzeuges angeordnet. Diese Verbindungselemente dienen der form- und kraftschlüssigen Verbindung der einzusetzenden Schleifwerkzeuge mit der Werkzeugspindel. Vorteilhaft sind diese Verbindungselemente derart ausgebildet, dass die Bestückung der Schleifwerkzeuge einfach von Hand oder automatisch erfolgen kann.

Beispielsweise ist axial innerhalb des Arbeitszylinders eine Betätigungsstange angeordnet, die mit einem Verriegelungsmechanismus der Verbindungselemente des Arbeitszylinders wirkverbunden ist. Über diese Betätigungsstange, welche beispielsweise federbehaftet in ihrer Verriegelungsstellung fixiert ist, kann ein Schleifwerkzeug automatisch von der Werkzeugspindel gelöst werden. Beispielsweise kann diese Bewegung hydraulisch über einen Hydraulikzylinder erfolgen, der beispielsweise durch eine Fusstaste oder eine anderweitige Steuerung bedient wird. Damit hat beispielsweise das Bedienpersonal beide Hände zur Manipulation der Werkzeuge frei.

Weiter wird die Aufgabe erfindungsgemäss durch eine Oberflächenbearbeitungsvorrichtung mit den Merkmalen von Anspruch 10 gelöst. Dabei wird mindestens ein erfindungsgemässer Werkzeughalter in einer Vorrichtung zur schleifenden Bearbeitung von Werkstücken eingesetzt. Vorteilhaft können dabei ohne Unterbruch mit einer Vorrichtung mit nur einem einzigen Werkzeughalter entsprechend der Anzahl unterschiedlicher Bearbeitungswerkzeuge im Werkzeughalter auf die Werkstücke unterschiedliche Bearbeitungsprozesse ausgeführt werden.

Weiter wird die Aufgabe erfindungsgemäss durch das Verfahren mit den Merkmalen nach Anspruch 11 gelöst.

Dabei werden die zu bearbeitenden Werkstücke auf einem Bearbeitungstisch angeordnet und dann wird der Werkstückhalter mit mindestens einem ersten, abgesenkten Bearbeitungswerkzeug in einem ersten Arbeitsschritt mit den Werkstücken in Arbeitskontakt gebracht und wird danach mit mindestens einem zweiten, abgesenkten Bearbeitungswerkzeug in einem zweiten Arbeitsschritt mit den Werkstücken in Arbeitskontakt gebracht. Damit können die Werkstücke ohne Unterbruch in mehreren, unterschiedlichen Arbeitsschritten bearbeitet werden, d.h. es können mehrere unterschiedliche Schleifwerkzeuge zum Einsatz kommen, ohne dass ein Werkzeugwechsel vorgenommen werden muss.

Beispielsweise werden mindestens drei verschiedene Bearbeitungswerkzeuge in mindestens drei aufeinander folgenden Arbeitsschritten in Arbeitskontakt mit den Werkstücken gebracht. Ohne Auswechseln von Werkzeugen ist damit auf einer Maschine mit nur einem einzigen Werkzeughalter eine 3-stufige schleifende, entgratende oder polierende Bearbeitung möglich.

Ausführungsbeispiele der vorliegenden Erfindung werden nachstehend anhand von Figuren noch näher erläutert. Es zeigen
Fig. 1 schematisch den Längsschnitt durch einen Teil eines erfindungsgemässen Werkzeughalter mit der Spindel in der Ruheposition;
Fig. 2 den Längsschnitt entsprechend Figur 1 mit der Spindel in der abgesenkten Arbeitsposition;
Fig. 3 schematisch die Ansicht der Unterseite eines erfindungsgemässen Werkzeughalters mit vier Schleifwerkzeugen;
Fig. 4 die schematische Aufsicht auf eine erfindungsgemässe Schleifvorrichtung mit Rundtisch.

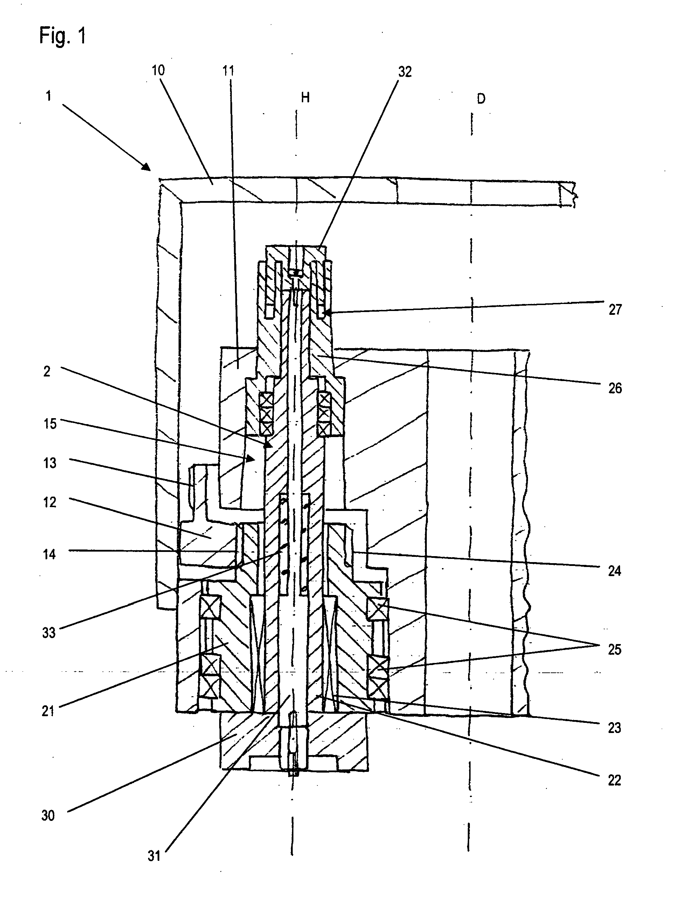

In Figur 1 ist rein schematisch der Längsschnitt durch eine Hälfte eines erfindungsgemässen Werkzeughalters 1 im Bereich einer Werkzeugspindel 2 (ohne Schleifwerkzeug) dargestellt.

Der Werkzeughalter 1 weist ein topfförmige äussere Gehäuseschale 10 auf, in welcher ein um die Drehachse D des Werkzeughalters 1 drehbarer Spindelträger 11 gelagert angeordnet ist. In diesem tellerförmigen Spindelträger 11 sind die Werkzeugspindeln 2 exzentrisch in Bezug auf die Drehachse D des Werkzeughalters 1 ebenfalls drehbar gelagert angeordnet.

Beispielsweise erfolgt der Antrieb der Werkzeugspindel 2 über einen ebenfalls innerhalb der Gehäuseschale 10 drehbar angeordneten Zahnring 12, der eine Aussenverzahnung 13 und eine Innenverzahnung 14 aufweist. In die Aussenverzahnung 13 greift beispielsweise das Ritzel eines am Werkzeughalter 10 angeordneten Elektromotors (nicht dargestellt) in für den Fachmann nahe liegender Weise ein. Der Spindelträger 11 wird beispielsweise über einen separaten Antrieb (nicht dargestellt) in für den Fachmann bekannter Weise ebenfalls angetrieben. Damit lassen sich sowohl der Spindelträger 11 wie auch die Werkzeugspindeln 2 unabhängig voneinander rotierend antreiben.

Die Werkzeugspindel 2 weist nun erfindungsgemäss einen zweiteiligen Basisaufbau auf, mit einem äusseren Hauptzylinder 21 und einem inneren Arbeitszylinder 22. Der Arbeitszylinder 22 ist dabei entlang der Hochachse H der Werkzeugspindel 2 gegenüber dem Hauptzylinder 21 verschiebbar aber verdrehsicher angeordnet. Hierfür sind im unteren Bereich der Werkzeugspindel 2 der Hauptzylinder 21 und der Arbeitszylinder 22 mit einer Kugelkeilwellenlagerung 23 ausgestattet. Eine derartige Lagerung wird beispielsweise in für den Fachmann bekannter Weise mittels drei Laufrillenpaaren, die an der Aussenwand des Arbeitszylinders 22 angeordnet oder ausgebildet sind und in einem Kugelkäfig angeordneten Kugeln realisiert. Dabei bildet beispielsweise die Innenwand des Hauptzylinders 21 die Mutter der Kugelkeilwellenlagerung oder es wird eine separate, mittels Feder-Nutverbindung mit dem Hauptzylinder 21 verbundene Hülse als Mutter eingesetzt. Eine derartige Lagerung erlaubt einerseits die Übertragung von grossen Drehmomenten zwischen Hauptzylinder 21 und Arbeitszylinder 22 bei ruhigen und stabilen Laufeigenschaften und andererseits eine einfache Verschiebbarkeit zwischen dem Hauptzylinder 21 und dem Arbeitszylinder 22.

Am unteren Ende der Werkzeugspindel 2 ist eine tellerförmige Werkzeugaufnahme 30 angeordnet. Diese Werkzeugaufnahme 30 ist zur form- und kraftschlüssigen Aufnahme von bekannten Tellerschleifwerkzeugen (nicht dargestellt) ausgelegt und weist vorteilhaft federbehaftete Verriegelungsnocken als Schnellverschluss für die Tellerschleifwerkzeuge zur schnellen Befestigung und Auswechseln der Tellerschleifwerkzeuge auf.

An der Aussenwand des Hauptzylinders 21 ist eine Verzahnung 24 angebracht, welche in die Innenverzahnung 14 des Zahnringes 12 eingreift. Der Hauptzylinder 21 ist über Kugellager 25 im Spindelträger 11 drehbar gelagert.

Als zusätzliche Abstützung weist die Werkzeugspindel 2 am oberen Ende des Arbeitszylinders 22 eine weitere Büchse 26 auf. Der Arbeitszylinder 22 ist über Kugellager 27 in der Büchse 26 drehbar gelagert. Damit wird eine präzise Ausrichtung der Hochachse H der Werkzeugspindel 2 im Werkzeughalter 1 erzielt. Die Büchse 26 ist ihrerseits in einer Bohrung 15 des Spindelträgers 11 längsverschiebbar entlang der Hochachse H der Werkzeugspindel 2 gelagert.

Damit wird erreicht, dass die Werkzeugspindel 2 entsprechend bekannten Werkzeugspindelanordnungen die für den Betrieb der Schleifwerkzeuge notwendige Laufstabilität und geometrische Genauigkeit erzielt, dabei aber gleichzeitig individuell im Werkzeughalter 1 in Richtung der Werkstücke zustellbar ausgeführt ist.

Innerhalb des Arbeitszylinders 22 ist koaxial zur Hochachse H eine Betätigungsstange 31 zur Steuerung von an der Werkzeugaufnahme 30 angeordneten Verriegelungsnocken angeordnet, die in bekannter Anordnung als Schnellverschluss für die Schleifwerkzeuge dienen. Diese Betätigungsstange 31 weist an ihrem oberen Ende einen Topfzylinder 32 auf, welcher in eine Ringbohrung 27 der Büchse 26 eingreift und damit einen Zylinderraum zwischen dem Topfzylinder 32 und Büchse 26 bildet, der hydraulisch oder pneumatisch befüllt werden kann und damit die Betätigungsstange 31 nach oben bewegt. Die in der Figur 1 dargestellte untere Ruheposition der Betätigungsstange 31 wird durch eine Druckfeder 33, welche zwischen der Betätigungsstange 31 und Arbeitszylinder 22 angeordnet ist, fixiert. In dieser Position sind vorteilhaft die erwähnten Verriegelungsnocken ebenfalls in ihrer Verriegelungsposition und halten damit ein an der Werkzeugaufnahme 30 angeordnetes Tellerschleifmittel fixiert.

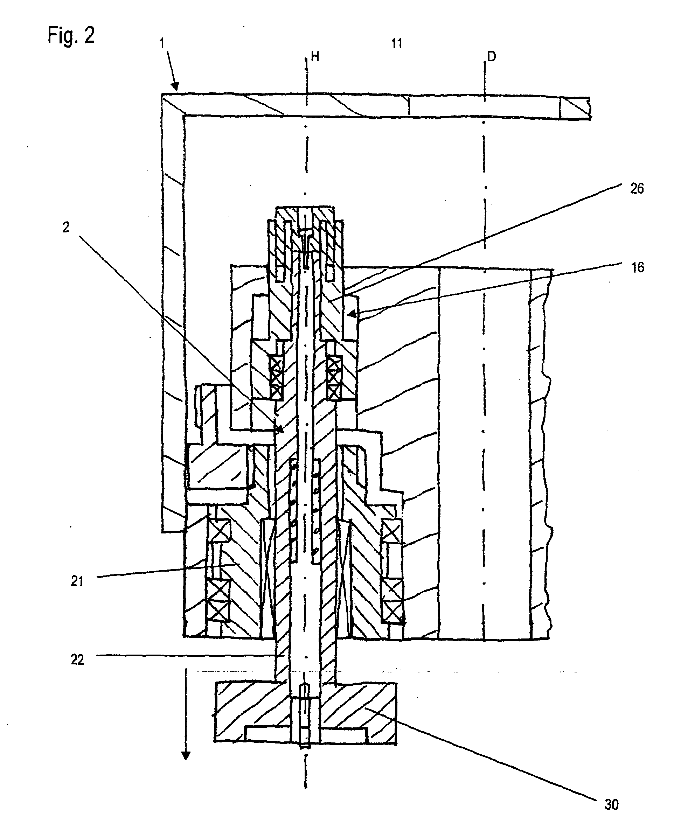

In Figur 2 ist nun die Schleifspindel 2 in ihrer Arbeitsposition dargestellt, d.h. mit abgesenktem Arbeitszylinder 22. Dies wird durch hydraulisches oder pneumatisches Befüllen der zwischen dem Spindelträger 11 und der Büchse 26 des Arbeitszylinders 22 gebildeten Ringkammer 16 erreicht. Damit wird die Werkzeugaufnahme 30 in Richtung der unterhalb des Werkzeughalters 1 angeordneten zu bearbeitenden Werkstücken (nicht dargestellt) zugestellt und diese können durch das an der Werkzeugaufnahme 30 angeordnete Tellerschleifwerkzeug bearbeitet werden. Das Zurückstellen des Arbeitszylinders in die Ruheposition nach Figur 1 erfolgt vorteilhaft federbehaftet.

Hierfür kann ein Federelement in für den Fachmann nahe liegender Weise angeordnet werden. Beispielsweise kann dies durch Anordnung von Druckfedern oberhalb des Spindelträgers 11 erfolgen, welche mit der Büchse 26 verbunden sind und diese bei Wegfall des Hydraulik- oder Pneumatikdrucks in der Ringkammer 16 in ihre obere Ruheposition entsprechend Figur 1 zurückführen. Einerseits ist an dieser Stelle ausreichend Platz für genügend starke Federn vorhanden und andererseits müssen damit die Federn auch nicht zusammen mit dem Hauptzylinder 21 und Arbeitszylinder 22 der Schleifspindel 2 angetrieben werden. Selbstverständlich können die Federmittel auch direkt an den Hauptzylinder 21 und Arbeitszylinder 22 angreifend ausgebildet sein.

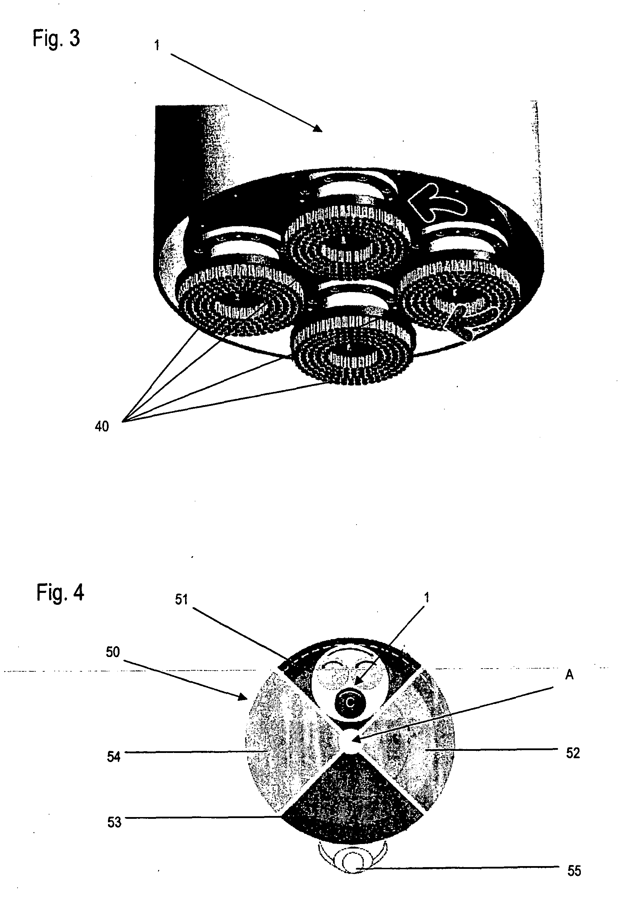

In Figur 3 ist die Unteransicht eines mit vier Schleifspindeln ausgerüsteten erfindungsgemässen Werkzeughalters 1 dargestellt. Jeder der Schleifspindeln ist dabei mit einem Tellerschleifmittel in Form von Bürstentellern 40 ausgerüstet. Erfindungsgemäss können nun jeweils unterschiedliche Tellerschleifmittel 40 an jeder oder an ausgewählten Schleifspindeln angeordnet werden, da jede Schleifspindel uns damit jedes Tellerschleifmittel 40 individuell in die Arbeitsposition abgesenkt werden kann.

Damit ist es möglich, ohne Auswechseln von Tellerschleifmitteln 40 mit einem einzigen Werkzeughalter 1 unterschiedliche Schleifprozesse an denselben Werkstücken vorzunehmen. Bei einem gemäss Figur 3 mit vier Schleifspindeln ausgerüstetem Werkzeughalter 1 sind beispielsweise unterschiedliche Schleifprozesse mit maximal vier verschiedenen Schleifmitteln ausführbar. Selbstverständlich können auch weniger unterschiedliche Schleifmittel eingesetzt werden.

In Figur 4 ist schematisch die Aufsicht auf eine erfindungsgemässe Schleifvorrichtung mit einem vorgängig beschrieben Werkzeughalter 1 dargestellt. Die Schleifvorrichtung weist dabei einen um eine zentrale Hochachse A drehbar angeordneten Rundtisch 50 auf. Dieser Rundtisch 50 ist beispielsweise in vier gleiche grosse Kreissegmente 51, 52, 53, 54 aufgeteilt.

Der Werkzeughalter 1 ist beispielsweise oberhalb des Kreissegmentes 51 angeordnet, welches damit das Arbeitssegment darstellt. Die beiden seitlichen Kreissegmente 52 und 54 bilden in diesem Fall Warte- oder Umkehrpositionen und das Kreissegment 53 dient als Wende-, Belade- und Entladeplatz und ist beispielsweise von Aussen für die manuelle Bedienung durch eine Bedienperson 55 zugänglich. Die übrigen Kreissegmente 51, 52 und 54 sind vorteilhaft durch eine Maschinenabdeckung verschlossen und damit von Aussen nicht direkt zugänglich. Durch Verdrehen des Rundtisches können nun die auf den Kreissegmenten angeordneten Werkstücke in die verschiedenen Bereiche 51, 52, 53, 54 gefahren werden. Anstelle der manuellen Bedienung durch eine Bedienperson 55 kann an dieser Stelle selbstverständlich auch ein Beschickungsroboter vorgesehen sein, der die Werkstücke automatisch aufbringt, ggf. wendet und nach der Bearbeitung auch wieder entfernt.

Die Werkstücke können entweder direkt auf dem Rundtisch 50 angeordnet sein oder in am Rundtisch 50 angeordneten Werkstückaufnahmen angeordnet sein. Die Werkstückaufnahmen ihrerseits können in Bezug auf den Rundtisch 50 fest oder beweglich angeordnet sein. Beispielsweise können die Werkstückaufnahmen um eine Achse parallel zur Hochachse A der Vorrichtung rotierend angetrieben sein. Weiter können die Werkstückaufnahmen auch gegenüber dem Rundtisch 50 kippbar angeordnet und ggf. steuerbar angetrieben sein.

Die Werkstückaufnahmen sind vorteilhaft in Form von Magnetspannbahnen ausgebildet, auf welchen metallische Teile ohne mechanische Unterstützung einfach fixiert und wieder gelöst werden.

Eine derartige Vorrichtung kann entsprechend der Anzahl von im Werkzeughalter 1 angeordneten Werkzeugspindeln für eine mehrstufige Bearbeitung der Werkstücke eingerichtet werden.

Im dargestellten Beispiel mit drei Werkzeugspindeln können bis zu drei unterschiedliche Schleifmittel eingesetzt werden und damit beispielsweise ohne Werkzeugmittelwechsel eine 3-stufige Bearbeitung der Werkstücke erfolgen. Selbstverständlich lässt sich die Vorrichtung auch mit drei identischen Werkzeugmitteln bestücken und damit eine einstufige Bearbeitung vornehmen. Dies zeigt den hohen Grad an Individualisierbarkeit der möglichen Bearbeitungsmöglichkeiten der erfindungsgemässen Vorrichtung. Gerade für kleinere Stückzahlen kann somit eine derartige Maschine lediglich mit einem einzigen Werkzeughalter 1 ausgerüstet sein, was sie im Vergleich zu herkömmlichen Rundtischmaschinen mit mehreren Werkzeughaltern mit jeweils einheitlichen Schleifwerkzeugen günstiger im Aufbau und Betrieb macht.

## Patentansprüche

1. Werkzeughalter mit mindestens zwei im Werkzeughalter (1) angeordneten Werkzeugspindeln (2) zur Aufnahme von Schleifwerkzeugen (40), wobei die Werkzeugspindeln (2) rotierbar um ihre Achse (H) angetrieben exzentrisch um eine gemeinsame Hochachse (D) des Werkzeughalters (1) ebenfalls rotierbar angetrieben angeordnet sind, **dadurch gekennzeichnet, dass** die Werkzeugspindeln (2) in Bezug auf den Werkzeughalter (1) axial zur Hochachse (D) unabhängig voneinander einzeln zwischen einer Arbeitsposition und einer Ruheposition einstellbar angeordnet sind.

2. Werkzeughalter nach Anspruch 1, **dadurch gekennzeichnet, dass** die Werkzeugspindeln (2) in einem um die Hochachse (D) drehbar im Werkzeughalter (1) angeordneten und mit einem Antrieb verbundenen Träger (11) drehbar gelagert sind.

3. Werkzeughalter nach Anspruch 1 oder 2, **dadurch gekennzeichnet, dass** die Werkzeugspindel (2) zwei ineinander koaxial in Bezug auf ihre Längsachse (H) verschiebbare Hohlzylinder aufweist, einen äusseren Hauptzylinder (21) und einen inneren Arbeitszylinder (23), wobei die beiden Zylinder (21,23) in Bezug auf ihre Längsachse (H) verdrehfest zueinander angeordnet sind.

4. Werkzeughalter nach Anspruch 3, **dadurch gekennzeichnet, dass** die verdrehfeste, längsverschiebbare Verbindung zwischen dem Hauptzylinder (21) und dem Arbeitszylinder (23) mittels einer Kugelkeilwelle (22) erfolgt.

5. Werkzeughalter nach Anspruch 4, **dadurch gekennzeichnet, dass** eine Kugelkeilwelle (22) mit mindestens drei Laufrillenpaaren eingesetzt ist.

6. Werkzeughalter nach einem der Ansprüche 3 bis 5, **dadurch gekennzeichnet, dass** zwischen den beiden Hohlzylindern (21,23) mindestens ein dichter Zylinderraum (16) ausgebildet ist der mit einem Hydraulik- oder Pneumatiksystem verbunden ist und am Hauptzylinder (21) und am Arbeitszylinder (23) jeweils mindestens eine gegeneinander gerichtete Wirkfläche ausgebildet ist, vorzugsweise in Form von ringförmigen, im Wesentlichen senkrecht zur Längsachse (H) der Werkzeugspindel (2) verlaufenden Wirkflächen.

7. Werkzeughalter nach einem der Ansprüche 3 bis 6, **dadurch gekennzeichnet, dass** Federmittel ausgebildet sind, um den Arbeitszylinder (23) gegenüber dem Hauptzylinder (21) in seiner Ruhestellung gegen einen Ruheanschlag zu fixieren.

8. Werkzeughalter nach einem der Ansprüche 3 bis 7, **dadurch gekennzeichnet, dass** am unteren Ende des inneren Arbeitszylinders (23) Verbindungselemente zur Aufnahme eines Schleifwerkzeuges (40) angeordnet sind.

9. Werkzeughalter nach Anspruch 8, **dadurch gekennzeichnet, dass** axial innerhalb des Arbeitszylinders (23) eine Betätigungsstange (31) angeordnet ist, die mit einem Verriegelungsmechanismus der Verbindungselemente des Arbeitszylinders (23) wirkverbunden ist.

10. Oberflächenbearbeitungsvorrichtung mit mindestens einem Werkzeughalter nach einem der Ansprüche 1 bis 9.

11. Verfahren zur schleifenden Bearbeitung von Werkstücken mit einem Werkzeughalter (1) nach einem der Ansprüche 1 bis 9, wobei die zu bearbeitenden Werkstücke auf einem Bearbeitungstisch (50) angeordnet werden, **dadurch gekennzeichnet, dass** der Werkstückhalter (1) mit mindestens einem ersten, abgesenkten Bearbeitungswerkzeug (40) in einem ersten Arbeitsschritt mit den Werkstücken in Arbeitskontakt gebracht wird und danach mit mindestens einem zweiten, abgesenkten Bearbeitungswerkzeug (40) in einem zweiten Arbeitsschritt mit den Werkstücken in Arbeitskontakt gebracht wird.

12. Verfahren nach Anspruch 11, **dadurch gekennzeichnet, dass** mindestens drei verschiedene Bearbeitungswerkzeuge (40) in mindestens drei aufeinander folgenden Arbeitsschritten in Arbeitskontakt mit den Werkstücken gebracht werden.

## Claims

1. Tool holder with at least two tool spindles (2) for receiving grinding tools (40) being arranged within the tool holder (1), the tool spindles (2) being driven in rotating manner around their axis (H) likewise in eccentric manner around a common vertical axis (D) of the tool holder (1), **characterized in that** the tool spindles (2) are arranged with respect to the tool holder (1) in axial manner to the vertical axis (D) individually adjustable independently from each other between a working position and an inoperative position.

2. Tool holder according to claim 1, **characterized in** the tool spindles (2) run on bearings in rotating manner arranged in the tool holder (1) around the vertical axis (D) and connected to a support (11) being connected a driving.

3. Tool holder according to claim 1 or 2, **characterized in that** the tool spindles (2) comprise two hollow cylinder being slideable into each other in coaxial manner with respect to their longitudinal axis (H), an outer main cylinder (21) and an inner working cylinder (23), both cylinder (21, 23) being arranged to each other in twistproof manner with respect to their longitudinal axis (H) .

4. Tool holder according to claim 3, **characterized in that** the twistproof connection between the main cylinder (21) and the working cylinder (23) slideable in longitudinal direction is obtained with the aid of a spherical cone shaft (22).

5. Tool holder according to claim 4, **characterized in that** a spherical cone shaft (22) is applied with at least three pairs of running grooves.

6. Tool holder according to one of the claims 3 to 5, **characterized in that** between both hollow cylinders (21, 23) at least a tight cylinder space (16) is formed being connected with a hydraulic or pneumatic system and a respective action face is formed at the main cylinder (21) and at the working cylinder (23), preferably in form of ring shaped action faces, substantially running vertically to the longitudinal axis (H) of the tool spindle (2).

7. Tool holder according to one of the claims 3 to 6, **characterized in that** spring means are formed in order to fix the working cylinder (23) opposite to the main cylinder (21) in its inoperative position against an inoperative stop.

8. Tool holder according to one of the claims 3 to 7, **characterized in that** connection elements for receiving a grinding tool (40) are arranged at the lower end of the inner working cylinder (23).

9. Tool holder according to claim 8, **characterized in that** an actuation rod (31) is arranged, which is operationally connected to a locking mechanism of the connecting elements of the working cylinder (23).

10. Surface grinding device with at least one tool holder according to one of the claims 1 to 9.

11. Method for grinding processing of workpieces with a tool holder (1) according to one of the claims 1 to 9, the workpieces to be worked on being arranged on a processing table (50), **characterized in that** in a first working step, the tool holder (1) is brought into working contact to the workpieces with at least a first, lowered processing tool (40) and thereafter, in a second working step, is brought into working contact to the work pieces with at least a second, lowered processing tool (40).

12. Method according to claim 11, **characterized in that** at least three different processing tools (40) in at least three subsequent working steps are brought into working contact to the workpieces.

## Revendications

1. Porte-outil avec au moins deux pivots à outil (2) pour recevoir des outils à meulage (40) étant arrangés à l'intérieur du porte-outil (1), les pivots à outil (2) étant entraînés de manière pivotable sur un axe (H) aussi de manière excentrique sur un axe vertical (D) commun du porte-outil (1), **caractérisé en ce que** les pivots à outils (2) sont arrangés par rapport au porte-outil (1) de manière axial à l'axe vertical (D) chacun indépendant ajustable individuellement entre une position travailleuse et une position inopérative.

2. Porte-outil selon la revendication 1, **caractérisé en ce que** les pivots à outils (2) ont un palier pivotable arrangé dans le porte-outil (1) sur l'axe vertical (D) pivotant dans le porte-outil (1) et connecté à un support (11) étant connecté à un entraînement.

3. Porte-outil selon la revendication 1 ou 2, **caractérisé en ce que** les pivots à outils (2) comprennent deux cylindres caves étant déplaçable l'un dans l'autre de manière coaxial par rapport à leur axe longitudinal (H), un cylindre extérieur (21) et un cylindre travailleur intérieur (23), les deux cylindres (21, 23) étant arrangés de manière ne pas tordable par rapport à leur axe longitudinal (H).

4. Porte-outil selon la revendication 3, **caractérisé en ce que** la connexion de manière ne pas tordable entre le cylindre principal (21) et le cylindre travailleur (23) déplaçable en direction longitudinal est obtenue à l'aide d'un arbre de cône sphérique (22).

5. Porte-outil selon la revendication 4, **caractérisé en ce que** l'arbre de cône sphérique (22) est appliqué avec au moins trois rainures de cours.

6. Porte-outil selon une des revendications 3 à 5, **caractérisé en ce qu'**entre les deux cylindres (21, 23) au moins un espace étroit (16) est formé étant connecté avec un système hydraulique ou pneumatique et une face d'action au cylindre principal (21) et au cylindre travailleur (23), préférablement formé annulaire, essentiellement de manière verticale par rapport à l'axe vertical (H) du pivot à outils (2) des faces d'action.

7. Porte-outil selon une des revendications3 à 5, **caractérisé en ce que** des moyens de ressort sont formés pour fixer le cylindre travailleur (23) vis-à-vis au cylindre principal (21) dans sa position inopérative contre un arrêt inopérative.

8. Porte-outil selon une des revendications 3 à 7, **caractérisé en ce que** les éléments de connexion pour recevoir l'outil de meulage (40) sont arrangés au bout inférieur du cylindre travailleur intérieur (23).

9. Porte-outil selon la revendication 8, **caractérisé en ce qu'**une barre d'actionnement (31) est arrangée, qui est reliée fonctionnellement à un mécanisme de verrouillage des éléments de connexion du cylindre travailleur (23).

10. Dispositif de meulage à surfaces avec au moins un porte-outil selon une des revendications 1 à 9.

11. Procédé pour traitement de meulage des pièce à fabriquer avec un porte-outil (1) selon une des revendications 1 à 9, les pièces à fabriquer sont arrangées sur une table de traitement (50), **caractérisé en ce que** le porte-outil (1) en un premier pas est mis en contact de travail aux pièces à fabriquer avec au moins un premier outil de traitement abaissé et après cela en un deuxième pas est mis en contact de travail aux pièces à fabriquer avec au moins un deuxième outil de traitement abaissé (40).

12. Procédé selon la revendication 11, **caractérisé en ce qu'**au moins trois outils de traitement (40) différents sont mis en contact de travail aux pièces à fabriquer en au moins trois pas différents.
